# EUROPÄISCHE PATENTANMELDUNG

(11) **EP 4 585 490 A1**
(43) Veröffentlichungstag der Anmeldung: **16.07.2025**
(21) Anmeldenummer: 24151846.3
(22) Anmeldetag: 15.01.2024
(51) Int. Cl.: B61L 5/10, B61L 27/53

(54) **VERFAHREN ZUR WEICHENDIAGNOSE FÜR EINE EISENBAHNWEICHE, SIMULATIONSMODELL UND RECHENEINRICHTUNG**

(71) Anmelder: Siemens Mobility GmbH, 81739 München (DE)
(72) Erfinder: Chao, Chen-Xiang, 38106 Braunschweig (DE); Bravo Vera, Antonio, 28050 Madrid (ES)
(74) Vertreter: Siemens Patent Attorneys

(57) **Zusammenfassung**

Die Erfindung betrifft ein Verfahren zur Weichendiagnose für eine Eisenbahnweiche (1), wobei die Eisenbahnweiche (1) wenigstens eine mechanische Prüfeinrichtung (6) zum Überprüfen von wenigstens einer Endposition der Eisenbahnweiche (1) umfasst. Um eine zuverlässige Weichendiagnose bereitzustellen, ist erfindungsgemäß vorgesehen, dass Daten zu einer mechanischen Anordnung der Prüfeinrichtung (6) und weiterer mit der Prüfeinrichtung (6) verbundener Teile der Eisenbahnweiche (1) in einem Grundzustand sowie ein Wert für eine Grundzustandstemperatur und wenigstens ein Materialkennwert der Prüfeinrichtung (6) und der verbundenen Teile ermittelt werden, und unter Verwendung der Daten zu der Anordnung im Grundzustand, der Grundzustandstemperatur und dem Materialkennwert eine Positionsänderung der Prüfeinrichtung (6), insbesondere in einem vorbestimmten Bereich, gegenüber dem geometrischen Grundzustand in Abhängigkeit von einer gegenüber der Grundzustandstemperatur veränderten Ist-Temperatur berechnet wird.

Die Erfindung betrifft weiterhin ein Simulationsmodell (14) einer Eisenbahnweiche (1) und eine Recheneinrichtung (12) für eine Eisenbahnweiche (1).

## Beschreibung

### Technisches Gebiet

Die Erfindung betrifft ein Verfahren zur Weichendiagnose für eine Eisenbahnweiche, wobei die Eisenbahnweiche wenigstens eine mechanische Prüfeinrichtung zum Überprüfen von wenigstens einer Endposition der Eisenbahnweiche umfasst.

Daneben betrifft die Erfindung auch ein Simulationsmodell einer Eisenbahnweiche und eine Recheneinrichtung für eine Eisenbahnweiche.

### Technischer Hintergrund

Eisenbahnweichen der genannten Art weisen eine mechanische Prüfeinrichtung auf, durch welche die Endpositionen der Eisenbahnweiche überprüft werden. Beispielsweise umfasst eine solche Prüfeinrichtung einen sogenannten Prüfschieber, der mit den Weichenzungen der Eisenbahnweiche verbunden ist und separat vom Stellmechanismus der Eisenbahnweiche von den Weichenzungen mitbewegt wird. Dadurch ist es möglich, über die Prüfeinrichtung die Endlagen der Weichenzungen unabhängig vom Stellmechanismus zu überprüfen. Dies geschieht beispielsweise mittels einer Nut im Prüfschieber, in die beim Erreichen der ordnungsgemäßen Endlagen jeweils ein sogenannter Sperrschieber einfährt. Nur in den Endlagen der Weichenzunge kann der Sperrschieber ausgefahren werden, so dass über den eingefahrenen Sperrschieber die Endlage der Eisenbahnweiche überprüft wird. Um gewisse Materialveränderungen wie beispielsweise durch Fertigungs- und Montagetoleranzen und ähnliches im Betrieb auszugleichen, ist die Nut im Prüfschieber größer ausgestaltet als der jeweilige Sperrschieber. Eine Toleranz im Bereich von etwa 5 mm ist hier durchaus üblich.

Trotzdem kommt es in der Praxis immer wieder zu Störungen im Betriebsablauf durch Eisenbahnweichen, deren Prüfeinrichtung einen Fehlalarm verursacht, obwohl die Weichenzungen in die ordnungsgemäße Endposition gefahren sind. Fehlerursache ist dann häufig, dass der Prüfschieber nicht in die Nut des Prüfschiebers fahren konnte, obwohl die Weichenzungen der Eisenbahnweiche ihre Endpositionen erreicht hatten. Solche Störungen haben Streckensperrungen zur Folge, die nur durch sofortigen Einsatz von Wartungspersonal vor Ort behoben werden können. Hierbei wird immer wieder festgestellt, dass sich die mechanische Prüfeinrichtung einer ausgefallenen Eisenbahnweiche im Betrieb so verändert bzw. elastisch verformt hat, dass die eigentliche Endlage der Weichenzunge über die Prüfeinrichtung nicht mehr korrekt ermittelt wird.

Eine Lösung für ein solches Problem ist beispielsweise in der EP 4 279 353 A1 beschrieben, in der an der Prüfeinrichtung angeordnete Sensoren Aufschluss über eine mögliche mechanische Veränderung geben soll. Allerdings ist dieses Verfahren aufwendig, weil eine Nachrüstung von bereits im Einsatz befindlicher Eisenbahnweichen zeit- und kostenaufwendig ist.

### Zusammenfassung der Erfindung

Es ist daher die Aufgabe der vorliegenden Erfindung, ein alternatives Verfahren der eingangs genannten Art bereitzustellen, mit dem ein Ausfall der Eisenbahnweiche durch eine fehlerhafte Prüfeinrichtung frühzeitig vermieden werden kann.

Gelöst wird die Aufgabe durch das Verfahren der Weichendiagnose der eingangs genannten Art, bei dem Daten zu einer mechanischen Anordnung der Prüfeinrichtung und weiterer mit der Prüfeinrichtung verbundener Teile der Eisenbahnweiche in einem Grundzustand sowie ein Wert für eine Grundzustandstemperatur und wenigstens ein Materialkennwert der Prüfeinrichtung und der verbundenen Teile ermittelt werden, und unter Verwendung der Daten zu der Anordnung im Grundzustand, der Grundzustandstemperatur und dem Materialkennwert eine Positionsänderung der Prüfeinrichtung, insbesondere in einem vorbestimmten Bereich, gegenüber dem geometrischen Grundzustand in Abhängigkeit von einer gegenüber der Grundzustandstemperatur veränderten Ist-Temperatur berechnet wird.

Weiterhin wird die Aufgabe gelöst durch ein Simulationsmodell der eingangs genannten Art, bei dem das Simulationsmodell unter Verwendung von Daten zu einer mechanischen Anordnung der Prüfeinrichtung und weiterer mit der Prüfeinrichtung verbundener Teile der Eisenbahnweiche in einem Grundzustand sowie eines Werts für eine Grundzustandstemperatur und wenigstens eines Materialkennwerts der Prüfeinrichtung und der verbundenen Teile erstellt ist und das Simulationsmodell zur Berechnung einer Positionsänderung der Prüfeinrichtung, insbesondere in dem vorbestimmten Bereich, gegenüber dem geometrischen Grundzustand in Abhängigkeit von einer gegenüber der Grundzustandstemperatur veränderten Ist-Temperatur ausgebildet ist.

Schließlich wird die Aufgabe auch durch eine Recheneinrichtung der eingangs genannten Art gelöst, bei dem die Recheneinrichtung zum Berechnen wenigstens einer Positionsänderung der Prüfeinrichtung gegenüber einem geometrischen Grundzustand unter Verwendung von Daten zu einer mechanischen Anordnung der Prüfeinrichtung und weiterer mit der Prüfeinrichtung verbundener Teile der Eisenbahnweiche in einem Grundzustand sowie eines Werts für eine Grundzustandstemperatur und wenigstens eines Materialkennwerts der Prüfeinrichtung und der verbundenen Teile in Abhängigkeit von einer gegenüber der Grundzustandstemperatur veränderten Ist-Temperatur ausgebildet ist.

Die erfindungsgemäße Lösung hat den Vorteil, dass sie sogar schon ohne zusätzliche Sensorik an der Eisenbahnweiche umsetzbar und dadurch relativ kostengünstig ist. Mit der erfindungsgemäßen Lösung können Veränderungen der Prüfeinrichtung berechnet werden, so dass eine Sensorik an der Eisenbahnweiche selbst nicht nötig ist.

Bei der erfindungsgemäßen Lösung werden beispielsweise bei der Inbetriebnahme oder nach einer Wartung der Eisenbahnweiche die Daten zur mechanischen Anordnung im Grundzustand ermittelt. Der Grundzustand ist somit ein Zustand, z.B. nach der Inbetriebnahme bzw. Wartung, wenn die Eisenbahnweiche und die Prüfeinrichtung ordnungsgemäß eingestellt und störungsfrei funktionsfähig sind. In diesem Grundzustand wird auch der Wert für die Grundzustandstemperatur aufgenommen, die die Temperatur der Eisenbahnweiche und der Prüfeinrichtung während des Grundzustands angibt. Der außerdem zu ermittelnde Materialkennwert der Prüfeinrichtung, der beispielsweise Elastizitätswerte umfasst, hängt vom Material bzw. den Materialien der Eisenbahnweiche ab und ist dem Hersteller der Eisenbahnweiche bekannt. Beispielsweise werden für einen isotropen Werkstoff wie Stahl meist zwei Elastizitätswerte (wie unten noch genauer beschrieben) benötigt. Aus den Daten zur Anordnung im Grundzustand, der Grundzustandstemperatur und dem wenigstens einen Materialkennwert wird erfindungsgemäß die Positionsänderung der Prüfeinrichtung unter Berücksichtigung der zur Grundzustandstemperatur veränderten Ist-Temperatur berechnet. Insbesondere kann als die Positionsänderung die aktuelle Position der Nut im Prüfschieber berechnet werden, deren Veränderung wie oben beschrieben eine häufige Ursache für die Ausfälle von Eisenbahnbereichen ist.

### Ausgestaltungen der Erfindung

Die Erfindung kann durch vorteilhafte Ausgestaltung weiterentwickelt werden, die im Folgenden beschrieben sind.

So kann zur Berechnung der Positionsänderung der Prüfeinrichtung, insbesondere in dem vorbestimmten Bereich, und unter Verwendung der Daten zu der Anordnung im Grundzustand, der Grundzustandstemperatur und dem Materialkennwert wenigstens ein Simulationsmodell für die Eisenbahnweiche erstellt werden und mittels des Simulationsmodells die Positionsänderung berechnet werden. Dies hat den Vorteil, dass sich ein Simulationsmodell für diese Berechnung besonders gut eignet. Es wird einmal erstellt und kann danach permanent benutzt werden. So kann die Positionsänderung der Prüfeinrichtung in Abhängigkeit von einer Temperaturveränderung auch sehr gut prognostiziert werden.

Ferner kann als Simulationsmodell ein FEM (Finite Elemente Methode) Modell und/oder ein FEA (Finite Elemente Analyse) Modell verwendet werden. FEM bzw. FEA sind bekannte Methoden, die sich besonders gut eignen, um den Einfluss von Temperaturveränderungen auf mechanische Teile vorauszuberechnen. Alternativ oder zusätzlich kann als Simulationsmodell ein Surrogat Modell (Ersatzmodell), beispielsweise basierend auf response surface modelling techniques (Techniken zur Modellierung von Antwortflächen) wie RBF, linear regression oder krigging oder basierend auf KI-Methoden wie SVM oder DNN, verwendet werden.

Um die Daten zur mechanischen Anordnung der Prüfeinrichtung besonders leicht ermitteln zu können, können die Daten zur mechanischen Anordnung der Prüfeinrichtung und der weiteren Teile im Grundzustand mittels 3D-Scanning, beispielsweise GOM-Scanning, ermittelt werden. 3D-Scanning ist mittlerweile ein etabliertes Verfahren, das sich besonders gut eignet und beispielsweise bei der Inbetriebnahme der Eisenbahnweiche schnell und einfach durchgeführt werden kann. Um eine frühzeitige Wartung der Eisenbahnweiche vorherzubestimmen, kann mittels des Simulationsmodells eine Grenztemperatur berechnet werden, ab der die berechnete Positionsänderung, insbesondere in dem vorbestimmten Bereich, einen vorgegebenen Grenzwert erreicht oder überschreitet.

Um eine besonders repräsentative Ist-Temperatur zu ermitteln, kann die Ist-Temperatur von wenigstens einem an oder im Bereich der Eisenbahnweiche angeordneten Temperatursensor ermittelt werden. Temperatursensoren sind mittlerweile kostengünstig verfügbar und leicht in die Eisenbahnweiche zu integrieren. Häufig sind auch bereits Temperatursensoren an den eingesetzten Eisenbahnweichen vorhanden, so dass diese genutzt werden können. Alternativ können auch in der Nähe der Eisenbahnweiche befindliche Temperatursensoren, beispielsweise an Stellwerken oder ähnlichen Eisenbahneinrichtungen, verwendet werden.

In einer weiteren vorteilhaften Ausgestaltung kann die Positionsänderung der Prüfeinrichtung unter Berücksichtigung einer prognostizierten höchsten Ist-Temperatur und/oder niedrigsten Ist-Temperatur in wenigstens einem vorgegebenen in der Zukunft liegenden Zeitabschnitt, wie beispielsweise einem Tag oder einer Woche, ermittelt werden. Dies hat den Vorteil, dass im Vorfeld für den in der Zukunft liegenden Zeitabschnitt geprüft werden kann, ob ein Ausfall wahrscheinlich und damit eine Wartung der Eisenbahnweiche nötig wird. So können Einsatzpläne von Wartungspersonal besonders gut vorbereitet werden. Eine vorausschauende Wartung der Eisenbahninfrastruktur ist hierdurch besonders effizient möglich. Ferner kann die prognostizierte höchste Ist-Temperatur und/oder niedrigste Ist-Temperatur unter Berücksichtigung vorhandener Wettervorhersagen ermittelt werden. Wettervorhersagen und deren Temperaturangaben sind mittlerweile für viele Gebiete sehr zuverlässig, so dass diese für das erfindungsgemäße Verfahren eingesetzt werden können.

Weiterhin betrifft die Erfindung ein Computerprogrammprodukt sowie auch eine Bereitstellungsvorrichtung für dieses Computerprogrammprodukt, wobei das Computerprogrammprodukt mit Programmbefehlen zur Durchführung des erfindungsgemäßen Verfahrens gemäß einer der zuvor genannten Ausführungsformen ausgestattet ist.

Schließlich betrifft die Erfindung auch eine Eisenbahnweiche mit wenigstens einer mechanischen Prüfeinrichtung zum Überprüfen von wenigstens einer Endposition der Eisenbahnweiche. Erfindungsgemäß weist die Eisenbahnweiche wenigstens eine erfindungsgemäße Recheneinrichtung der zuvor genannten Art auf.

In einer vorteilhaften Ausgestaltung der erfindungsgemäßen Eisenbahnweiche kann die Eisenbahnweiche wenigstens einen Temperatursensor umfassen, der zur Ermittlung der Ist-Temperatur ausgebildet ist.

### Exemplarische Ausführungsbeispiele der Zeichnung

Im Folgenden wird die Erfindung mit Bezug auf die beispielhaften Ausführungsformen in den beigefügten Zeichnungen beschrieben.

Es zeigen:
- Fig. 1: eine schematische Darstellung einer beispielhaften Ausführungsform einer erfindungsgemäßen Eisenbahnweiche;
- Fig. 2: eine schematische Darstellung eines Details aus Figur 1;
- Fig. 3: eine schematische Darstellung einer alternativen Ausführungsform einer erfindungsgemäßen Eisenbahnweiche;
- Fig. 4: eine schematische Darstellung einer anderen Ansicht der Ausführungsform in Figur 3;
- Fig. 5: eine schematische Darstellung einer anderen Ansicht der Ausführungsform in Figur 3.

### Detaillierte Beschreibung der Ausführungsbeispiele

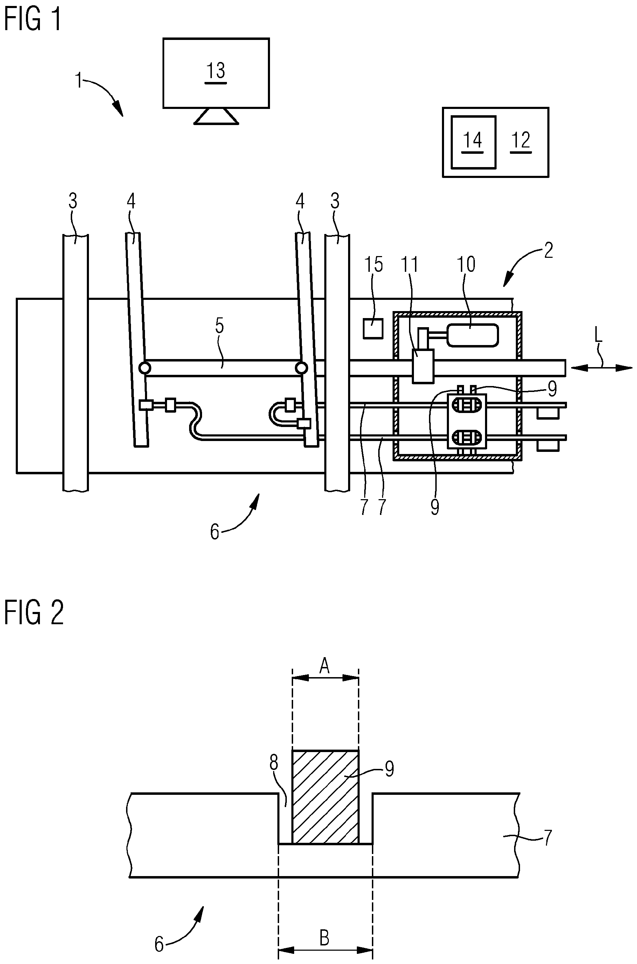

Zunächst wird die Erfindung mit Bezug auf die beispielhafte Ausführungsform der Figuren 1 und 2 beschrieben.

Die Figuren 1 und 2 zeigen eine beispielhafte Ausführungsform einer erfindungsgemäßen Eisenbahnweiche 1, die Teil einer nicht weiter dargestellten eisenbahntechnischen Anlage ist.

Die Eisenbahnweiche 1 umfasst einen Weichenantrieb 2, Backenschienen 3 und Weichenzungen 4. Der Weichenantrieb 2 bewegt die Weichenzungen 4 mittels eines angetriebenen Stellschiebers 5 zwischen den Backenschienen 3 hin und her. Um die Endlagen der Weiche 1, in denen eine der Weichenzungen 4 jeweils an einer der Backenschienen 3 anliegt, zu kontrollieren, umfasst die Weiche 1 wenigstens eine Prüfeinrichtung 6. Die Prüfeinrichtung 6 weist bei der beispielshaften Ausführungsform in Fig. 1 zwei Prüfschieber 7 auf, die unabhängig vom Stellschieber 5 mit den Weichenzungen 4 verbunden sind. Die Prüfschieber 7 sind linear geführt und weisen jeweils zwei Prüfnuten 8 auf, in die in den Endpositionen der Weiche 1 jeweils ein Sperrschieber 9 als Verriegelungseinrichtung einfahren kann. Die Sperrschieber 9 sind ebenfalls Teil des Weichenantriebs 2. In Figur 2 ist einer der Prüfschieber 7 mit einer Prüfnut 8 und dem darin eingefahrenen Sperrschieber 9 als Detail von Figur 1 dargestellt. Die Prüfnut 8 ist in einer Längsrichtung L des Prüfschiebers 7 größer als die Breite A des Sperrschiebers 9. Die Länge der Prüfnut 8 ist in Figur 2 mit B bezeichnet.

Der Weichenantrieb 2 umfasst in der beispielhaften Ausführungsform der Figuren 1 und 2 ferner einen Antriebsmotor 10, der über ein Getriebe 11 mit dem Stellschieber 5 verbunden ist. Die Sperrschieber 9 werden ebenfalls vom Weichenantrieb 2 angetrieben, der sie in den Endpositionen der Weiche 1 in die Prüfnut 8 des jeweiligen Prüfschiebers 7 einfährt. Der eingefahrene Zustand der Sperrschieber 9 wird vom Weichenantrieb 2 jeweils überwacht.

Wenn die Sperrschieber 9 in den Endpositionen der Eisenbahnweiche 1 nicht mit der jeweiligen Prüfnut 8 fluchten und dadurch nicht in sie einfahren können, geht die Eisenbahnweiche 1 in Störung, weil nicht sichergestellt ist, dass die Eisenbahnweiche 1 wirklich ihre Endposition erreicht hat.

Die Positionen der Prüfschieber 7 und insbesondere der Prüfnuten 8 können sich im Betrieb der Eisenbahnweiche 1 relativ zu den Sperrschiebern 9 verändern, ohne dass eine betrieblich relevante Veränderung der Position der Weichenzungen 4 vorliegt. Um diese aus der Mechanik begründete Veränderung auszugleichen, ist die Länge B der Prüfnut 8 größer als die Breite A des Sperrschiebers 9. Trotz dieses Größenunterschieds und der dadurch im Normalfall vorhandenen Lücke, kann es im Betrieb der Eisenbahnweiche 1 vorkommen, dass eine der Prüfnuten 8 in den Endpositionen der Eisenbahnweiche 1 nicht mit dem jeweiligen Sperrschieber 9 fluchten. Die Eisenbahnweiche 1 geht in solch einem Fall in Störung, obwohl die Weichenzunge 4 ihre Endposition erreicht hat. Es liegt also nur ein Fehler der Prüfeinrichtung 6 vor und keine Störung der gesamten Eisenbahnweiche 1. In solch einem Fall darf ein Zug die Eisenbahnweiche 1 passieren und es muss eine sofortige Wartung der Eisenbahnweiche 1 vor Ort erfolgen. Dabei wird die Funktion der Eisenbahnweiche 1 überprüft und gegebenenfalls die Prüfeinrichtung 6 neu eingestellt. Dies kann sehr zeit- und kostenaufwendig sein und ist schlecht im Voraus planbar.

Die erfindungsgemäße Eisenbahnweiche 1 umfasst weiterhin eine Recheneinrichtung 12, die zum Berechnen einer Positionsänderung der Prüfeinrichtung 6 gegenüber einem geometrischen Grundzustand ausgebildet ist. Hierfür muss zunächst eine Vielzahl von Daten in dem Grundzustand erfasst werden.

Der Grundzustand der Eisenbahnweiche 1 ist ein Zustand, beispielsweise nach einer Inbetriebnahme oder einer erfolgreichen Wartung, in dem die Eisenbahnweiche voll funktionsfähig ist, also auch die Prüfeinrichtung 6 in den Endpositionen funktioniert. In diesem Grundzustand werden zunächst eine Vielzahl von Daten zur mechanischen Anordnung der Prüfeinrichtung 6 und weiterer Teile der Eisenbahnweiche 1, wie den Weichenzungen, den Backenschienen, dem Weichenantrieb 2 usw., erfasst.

Bei der beispielhaften Ausführungsform in den Figuren 1 und 2 werden die Daten im Grundzustand mittels eines 3D-Scanners 13 erfasst. Dabei werden insbesondere die Positionen der Prüfeinrichtung 6 und der übrigen beweglichen Teile der Eisenbahnweiche 1 zueinander festgehalten. Der 3D-Scanner 13 kann beispielsweise einen GOM Scan durchführen.

Weiterhin wird in dem Grundzustand ein Wert für die vorherrschende Temperatur gemessen und als Grundzustandstemperatur festgehalten. Mit den erfassten Daten und der Grundzustandstemperatur und weiteren Materialkennwerten der Eisenbahnweiche 1 und der Prüfeinrichtung 6 wird ein Simulationsmodell 14 erstellt.

Das Simulationsmodell kann beispielsweise nach der Finite Elemente Methode (FEM) oder der Finite Elemente Analyse (FEA) erstellt werden, die sich beide sehr gut eignen. In das Simulationsmodell 14 gehen auch die Materialkennwerte ein, die beispielsweise Elastizitätswerte für das Material der Eisenbahnweiche 1 sind. Bei isotropen Materialien, die üblicherweise bei einer Eisenbahnweiche 1 zum Einsatz kommen, wären das beispielsweise zwei von drei Werten aus Elastizitätsmodul, Querkontraktionszahl und Schubmodul, die in das Simulationsmodell mit eingebaut werden. Bei einer Verwendung von bisher in diesem Zusammenhang unüblichen Faserverbundwerkstoffen, wie beispielsweise GFK oder CFK, würden noch weitere richtungsabhängige Materialkennwerte zusätzlich Verwendung finden. Falls es einen haftungsbasierten Anteil in der Kinematikkette der Prüfeinrichtung 6 oder der Eisenbahnweiche 1 gibt, können auch Reibwerte zusätzlich verwendet werden. In vielen Fällen können diese aber vernachlässigt werden.

Mit Hilfe des Simulationsmodells 14 kann bei einer gegenüber der Grundzustandstemperatur veränderten Ist-Temperatur beispielsweise berechnet werden, wie groß die Positionsänderung der Prüfnut 8 in der Längsrichtung L gegenüber dem jeweiligen Sperrschieber 9 ist. Folglich kann auch berechnet werden, bei welcher Ist-Temperatur die Positionsänderung so groß wird, dass der Sperrschieber 9 nicht mehr in die Prüfnut 8 einfahrbar ist und somit es zu einem Ausfall der Eisenbahnweiche 1 kommen würde.

Wenn bei der erfindungsgemäßen Eisenbahnweiche 1 in Fig. 1 von der Recheneinrichtung 12 eine Positionsänderung der Prüfeinrichtung 6 berechnet wird, die einen vorgegebenen Grenzwert überschreitet, wird eine vorbestimmte Aktion ausgelöst. Diese Aktion kann beispielsweise ein entsprechendes Signal an eine Leitstelle sein, durch die eine Wartung der Eisenbahnweiche 1 ausgelöst wird. Der vorgegebene Grenzwert ist dabei vorzugsweise so gewählt, dass die Eisenbahnweiche 1 noch funktionsfähig ist und somit noch Zeit für eine geplante Wartung bleibt.

Die für die Berechnung der Positionsänderung nötige Ist-Temperatur kann auf verschiedene Art und Weisen ermittelt beziehungsweise prognostiziert werden. Zum einen kann eine reale Ist-Temperatur beispielsweise durch einen an der Weiche angeordneten Temperatursensor 15 ermittelt werden. Vorzugsweise ist der Temperatursensor 15 in der Nähe der Prüfeinrichtung 6 oder direkt an der Prüfeinrichtung 6 angeordnet, um eine möglichst genaue Temperatur des Prüfschiebers 7 zu ermitteln. Alternativ kann als Ist-Temperatur aber auch eine aktuelle Umgebungstemperatur verwendet werden, die beispielsweise aus einer Wetterapp oder durch ein Außentemperaturthermometer bekannt ist.

Alternativ kann aber auch eine prognostizierte höchste Ist-Temperatur oder niedrigste Ist-Temperatur in einem vorgegebenen in der Zukunft liegenden Zeitabschnitt verwendet werden. Dieser Zeitabschnitt kann z.B. eine Woche in die Zukunft oder auch weiter reichen, je nachdem wie zuverlässig die Prognosen hier vorhanden sind. Hier können auch Werte aus Wettervorhersagen verwendet werden.

Die Recheneinrichtung 12 kann wie in Fig. 1 dargestellt in der Nähe des Weichenantriebs 2 angeordnet sein. Alternativ kann die Recheneinrichtung 12 aber auch entfernt, beispielsweise im Stellwerk oder einer Leitstelle der eisenbahntechnischen Anlage, angeordnet sein. Eine entfernte Recheneinrichtung 12 kann auch mehrere Simulationsmodelle 14 für verschiedene Eisenbahnweichen 1 umfassen und so die Berechnung der Positionsänderung für verschiedene Eisenbahnweichen 1 ausführen.

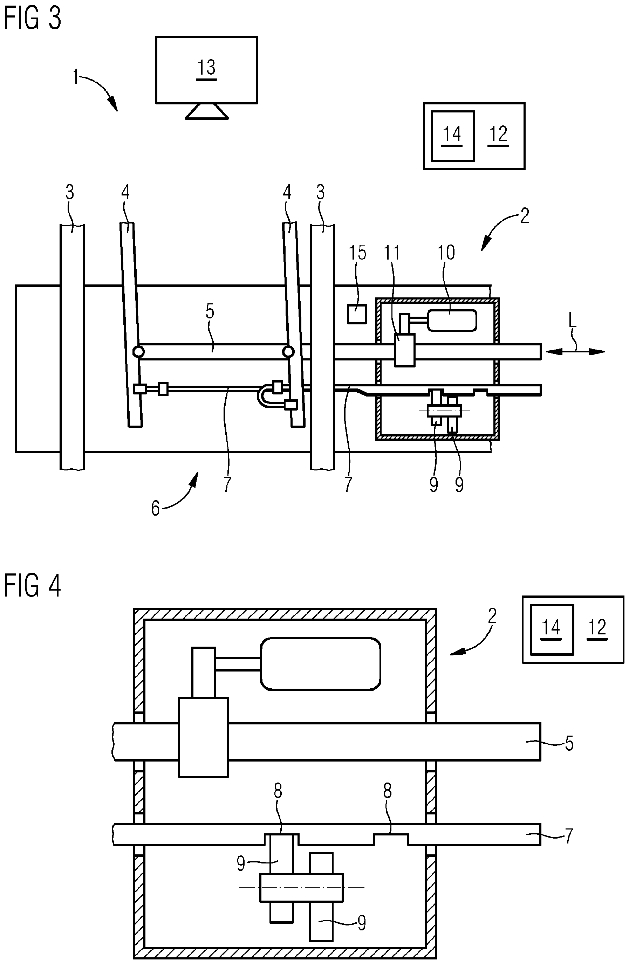

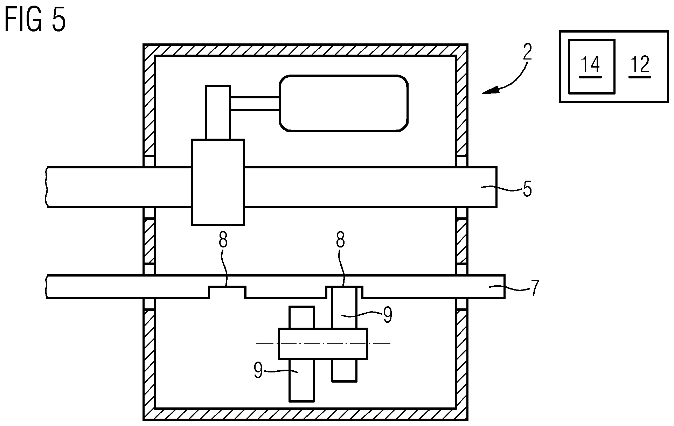

Im Folgenden wird die Erfindung mit Bezug auf die alternative Ausführungsform der Figuren 3 bis 5 beschrieben. Der Einfachheit halber wird lediglich auf die Unterschiede zu der Ausführungsform der Figuren 1 und 2 eingegangen. Gleiche Teile werden mit gleichen Bezugseichen bezeichnet.

Bei der Ausführungsform in den Figuren 3 bis 5 ist die Prüfeinrichtung 6 mechanisch anders ausgebildet, so dass die beiden Prüfschieber 7 in der Draufsicht in den Figuren 3 bis 5 übereinander liegen. Dadurch greifen auch die anders ausgebildeten Sperrschieber 9 anders in die Prüfnuten 8 ein. Ansonsten entspricht die Ausführungsform der Figuren 3 bis 5 im Wesentlichen der Ausführungsform der Figuren 1 und 2.

## Patentansprüche

1. Verfahren zur Weichendiagnose für eine Eisenbahnweiche (1), wobei die Eisenbahnweiche (1) wenigstens eine mechanische Prüfeinrichtung (6) zum Überprüfen von wenigstens einer Endposition der Eisenbahnweiche (1) umfasst,
**dadurch gekennzeichnet, dass**
Daten zu einer mechanischen Anordnung der Prüfeinrichtung (6) und weiterer mit der Prüfeinrichtung (6) verbundener Teile der Eisenbahnweiche (1) in einem Grundzustand sowie ein Wert für eine Grundzustandstemperatur und wenigstens ein Materialkennwert der Prüfeinrichtung (6) und der verbundenen Teile ermittelt werden, und
unter Verwendung der Daten zu der Anordnung im Grundzustand, der Grundzustandstemperatur und dem Materialkennwert eine Positionsänderung der Prüfeinrichtung (5), insbesondere in einem vorbestimmten Bereich, gegenüber dem geometrischen Grundzustand in Abhängigkeit von einer gegenüber der Grundzustandstemperatur veränderten Ist-Temperatur berechnet wird.

2. Verfahren nach Anspruch 1,
**dadurch gekennzeichnet, dass**
zur Berechnung der Positionsänderung der Prüfeinrichtung (6), insbesondere in dem vorbestimmten Bereich, und unter Verwendung der Daten zu der Anordnung im Grundzustand, der Grundzustandstemperatur und dem Materialkennwert wenigstens ein Simulationsmodell (14) für die Eisenbahnweiche (1) erstellt wird und
mittels des Simulationsmodells (14) die Positionsänderung berechnet wird.

3. Verfahren nach Anspruch 1 oder 2,
**dadurch gekennzeichnet, dass**
als das Simulationsmodell (14) ein FEM (Finite Elemente Methode) Modell und/oder ein FEA (Finite Elemente Analyse) Modell verwendet werden.

4. Verfahren nach einem der oben genannten Ansprüche 1 bis 2,
**dadurch gekennzeichnet, dass**
als das Simulationsmodell (14) ein Surrogat Modell, beispielsweise basierend auf response surface modelling techniques wie RBF, linear regression oder krigging oder basierend auf KI_Methoden wie SVM oder DNN, verwendet wird.

5. Verfahren nach einem der oben genannten Ansprüche,
**dadurch gekennzeichnet, dass**
die Daten zur mechanischen Anordnung der Prüfeinrichtung (6) und der weiteren Teile im Grundzustand mittels 3D Scanning, beispielsweise GOM Scanning, ermittelt werden.

6. Verfahren nach einem der oben genannten Ansprüche,
**dadurch gekennzeichnet, dass**
mittels des Simulationsmodells (14) eine Grenztemperatur berechnet wird, ab der die berechnete Positionsänderung, insbesondere in dem vorbestimmten Bereich, einen vorgegebenen Grenzwert erreicht oder überschreitet.

7. Verfahren nach einem der oben genannten Ansprüche,
**dadurch gekennzeichnet, dass**
die IST-Temperatur von wenigstens einem an oder im Bereich der Eisenbahnweiche (1) angeordneten Temperatursensor (15) ermittelt wird.

8. Verfahren nach einem der oben genannten Ansprüche,
**dadurch gekennzeichnet, dass**
die Positionsänderung der Prüfeinrichtung (6) unter Berücksichtigung einer prognostizierten höchsten Ist-Temperatur und/oder niedrigsten Ist-Temperatur in wenigstens einem vorgegebenen in der Zukunft liegenden Zeitabschnitt, wie beispielsweise einem Tag oder einer Woche, ermittelt wird.

9. Verfahren nach Anspruch 8,
**dadurch gekennzeichnet, dass**
die prognostizierte höchste Ist-Temperatur und/oder niedrigste Ist-Temperatur unter Berücksichtigung vorhandener Wettervorhersagen ermittelt werden.

10. Verfahren nach einem der oben genannten Ansprüche,
**dadurch gekennzeichnet, dass**
wenigstens eine Aktion ausgelöst wird, wenn die berechnete Positionsänderung einen vorgegebenen Grenzwert überschreitet.

11. Computerprogrammprodukt mit Programmbefehlen zur Durchführung des Verfahrens nach einem der Ansprüche 1 bis 10.

12. Simulationsmodell (14) einer Eisenbahnweiche (1), wobei die Eisenbahnweiche (1) wenigstens eine mechanische Prüfeinrichtung (6) zum Überprüfen von wenigstens einer Endposition der Eisenbahnweiche (1) umfasst,
**dadurch gekennzeichnet, dass**
das Simulationsmodell (14) unter Verwendung von Daten zu einer mechanischen Anordnung der Prüfeinrichtung (6) und weiterer mit der Prüfeinrichtung (6) verbundener Teile der Eisenbahnweiche (1) in einem Grundzustand sowie eines Werts für eine Grundzustandstemperatur und wenigstens eines Materialkennwerts der Prüfeinrichtung (6) und der verbundenen Teile erstellt ist und
das Simulationsmodell (14) zur Berechnung einer Positionsänderung der Prüfeinrichtung (6), insbesondere in dem vorbestimmten Bereich, gegenüber dem geometrischen Grundzustand in Abhängigkeit von einer gegenüber der Grundzustandstemperatur veränderten Ist-Temperatur ausgebildet ist.

13. Recheneinrichtung (12) für eine Eisenbahnweiche (1), wobei die Eisenbahnweiche (1) wenigstens eine mechanische Prüfeinrichtung (6) zum Überprüfen von wenigstens einer Endposition der Eisenbahnweiche (1) umfasst,
**dadurch gekennzeichnet, dass**
die Recheneinrichtung (12) zum Berechnen wenigstens einer Positionsänderung der Prüfeinrichtung (6) gegenüber einem geometrischen Grundzustand unter Verwendung von Daten zu einer mechanischen Anordnung der Prüfeinrichtung (6) und weiterer mit der Prüfeinrichtung (6) verbundener Teile der Eisenbahnweiche (1) in einem Grundzustand sowie eines Werts für eine Grundzustandstemperatur und wenigstens eines Materialkennwerts der Prüfeinrichtung (6) und der verbundenen Teile in Abhängigkeit von einer gegenüber der Grundzustandstemperatur veränderten Ist-Temperatur ausgebildet ist.

14. Eisenbahnweiche (1) mit wenigstens einer mechanischen Prüfeinrichtung (6) zum Überprüfen von wenigstens einer Endposition der Eisenbahnweiche (1),
**dadurch gekennzeichnet, dass**
die Eisenbahnweiche (1) wenigstens eine Recheneinrichtung (12) nach Anspruch 13 aufweist.

15. Eisenbahnweiche (1) nach Anspruch 14,
**dadurch gekennzeichnet, dass**
die Eisenbahnweiche (1) wenigstens einen Temperatursensor (15) umfasst, der zur Ermittlung der Ist-Temperatur ausgebildet ist.
